# EUROPEAN PATENT SPECIFICATION

(11) **EP 4 133 309 B1**
(45) Date of publication and mention of the grant of the patent: **28.10.2026**
(21) Application number: 21722622.4
(22) Date of filing: 06.04.2021
(51) Int. Cl.: G01T 7/00, G01N 23/223

(54) **X-RAY INSTRUMENT WITH AMBIENT TEMPERATURE DETECTOR**
RÖNTGENGERÄT MIT UMGEBUNGSTEMPERATURDETEKTOR
INSTRUMENT À RAYONS X À DÉTECTEUR DE TEMPÉRATURE AMBIANTE

(30) Priority: 09.04.2020 US 202063007487 P
(43) Date of publication of application: 15.02.2023
(73) Proprietor: Evident Scientific, Inc., Waltham, MA 02453 (US)
(72) Inventor: HARDMAN, Peter, Waltham, Massachusetts 02453 (US)
(74) Representative: Novagraaf Group
(86) International application number: PCT/US2021/025938
(87) International publication number: WO 2021/207175

(56) References cited:
- WO-A1-2019/117276
- US-A1- 2005 269 513
- US-A1- 2014 048 717
- PAUSCH G ET AL: "Stabilizing scintillation detector systems: determination of the scintillator temperature exploiting the temperature dependence of the light pulse decay time", 2004 IEEE NUCLEAR SCIENCE SYMPOSIUM CONFERENCE RECORD 16-22 OCT. 2004 ROME, ITALY, IEEE, PISCATAWAY, NJ, USA, vol. 2, 16 October 2004 (2004-10-16), pages 846 - 850, XP010818965, ISBN: 978-0-7803-8700-3, DOI: 10.1109/NSSMIC.2004.1462340

## Description

### CROSS-REFERENCE TO RELATED APPLICATION

This application claims the benefit of priority to U.S. Provisional Patent Application Serial No. 63/007,487, filed April 9, 2020.

### FIELD OF THE INVENTION

Example implementations of the present invention relate to instruments for making X-ray analysis, more particularly to an X-ray analyzer using an energy dispersive detector operating at a variable ambient temperature without the need of temperature control of the detector.

### BACKGROUND OF THE INVENTION

X-ray spectrometer instruments, such as X-ray fluorescence (XRF) instruments, are configured to measure the energy distribution of X-rays emitted from a sample. From the energy spectrum of the emitted x-rays, the chemical composition of the sample material can be calculated. In such instruments, the X-ray energy spectrum is measured with an energy dispersive semiconductor detector in which X-rays incident on the detector generate electron-hole pairs in the semiconductor, and the detector thereby collects an electrical charge which is proportional to the X-ray energy. The charge is received and amplified by a charge sensitive pre-amplifier, such as a Field Effect Transistor (FET), usually located in close proximity to the detector. The charge sensitive pre-amplifier converts the charge from each incident X-ray into a voltage pulse signal whose height is proportional to the X-ray energy. The voltage pulse signal may then be further amplified by one or more second stage amplifiers which are usually located on at least one printed circuit board (PCB) within the X-ray instrument.

Energy dispersive semiconductor X-ray detectors are usually cooled and controlled to maintain a constant low temperature because at ambient temperature the leakage current generated from thermally induced electron-hole pairs in the semiconductor may be too high. The leakage current generates a continuous background noise which varies with temperature and may interfere with accurate measurement of the X-ray generated signal. Cooling to temperatures in the range of - 10°C to -20°C is usually achieved with a thermo-electric cooling device or the like. However, the requirements to provide cooling and to maintain thermal isolation between the detector and the ambient environment add to the cost and complexity of the X-ray detector. The cooling device needs to be provided with power and, for the cooling to work effectively, the detector needs to be in a vacuum or reduced pressure environment to prevent heat conduction and condensation.

In an instrument having a detector operating at ambient temperature, there is no requirement to provide cooling power. Moreover, the detector does not need to be under vacuum, meaning that the detector window does not have to maintain the typically high level of vacuum. The function of the window in an ambient temperature instrument is only to keep light, dust and moisture away from the detector chip, and to let in x-rays. The window can then potentially be made of cheaper materials, and the processing and packaging costs of vacuum encapsulation can be avoided. However, the temperature dependency of the performance of the detectors need to be corrected in order to achieve accurate and repeatable measurement results.

Therefore, there exists a need for an X-ray analyzing instrument in which the X-ray detector does not require cooling and would therefore be significantly smaller, cheaper, and use less power than detectors used in current practice. Removal of the requirement for cooling and producing reliable accurate result would be particularly advantageous for a low cost, hand-held or portable X-ray analyzing instrument.

Patent application publication WO 2019/117276 A1 discloses a configuration of a radiation detector wherein a signal processing unit compensates for the effect of temperature on a radiation detection element.

### SUMMARY

In example implementations of the current invention, there is provided an X-ray analyzer for determining the elemental composition of a test object. In the example implementations, the analyzer comprises at least one detector configured to detect a secondary X-ray (for example X-ray fluorescence) from a test object irradiated by the X-ray source and provide a corresponding energy signal wherein the at least one detector is a silicon drift detector. The analyzer also comprises a temperature sensor configured to sense a temperature related to the at least one detector. The analyzer further comprises a signal processor comprising a temperature compensator configured to process the energy signal and provide a temperature compensated output for an X-ray event.

The energy signal includes a pulse having a pulse height wherein the pulse height includes an offset caused by temperature-induced pulse-leakage of the at least one detector, and the temperature compensated output includes adjustment to the gain of the pulse height according to the temperature. Further the pulse presents an offset caused by temperature induced leakage of the detector, and the temperature compensated output further includes adjustment of the pulse height with an offset according to the temperature.

### BRIEF DESCRIPTION OF THE DRAWINGS

Fig. 1 is a schematic diagram of an example implementation of an X-ray analyzer according to the present disclosure.
Fig. 2 is a diagram exhibiting changes in the pulse height in association with changes in detector temperature, and the method of deriving temperature compensation according to an example implementation of the present disclosure.
Fig. 3 is a diagram depicting changes in energy signal caused by pulse leakage in association with changes in detector temperature, and the method of deriving temperature compensation according to an example implementation of the present disclosure.
Fig. 4 is a diagram depicting the pulse height as a function of energy, and the method of deriving temperature compensation based on different gain and leakage offset according to an example implementation of the present disclosure.
Fig. 5 is a diagram depicting the basis of an alternative implementation by using smaller detectors to achieve desirable range of gain response to detector temperature changes according to the present disclosure.
Fig. 6 is a schematic of an X-ray analyzer with a detector and two temperature sensors according to an example implementation of the present disclosure.
Fig. 7 is a schematic of an X-ray analyzer with a detector and one temperature sensor according to an example implementation of the present disclosure.
Fig. 8 is a flow chart of a method of devising an X-ray analyzer with at least one detector operating without temperature control according to an example implementation of the present disclosure.
Fig. 9 is a flow chart of an alternative method of operating an X-ray instrument with at least one ambient temperature detector according to an example implementation of the present disclosure.

### DETAILED DESCRIPTION OF THE INVENTION

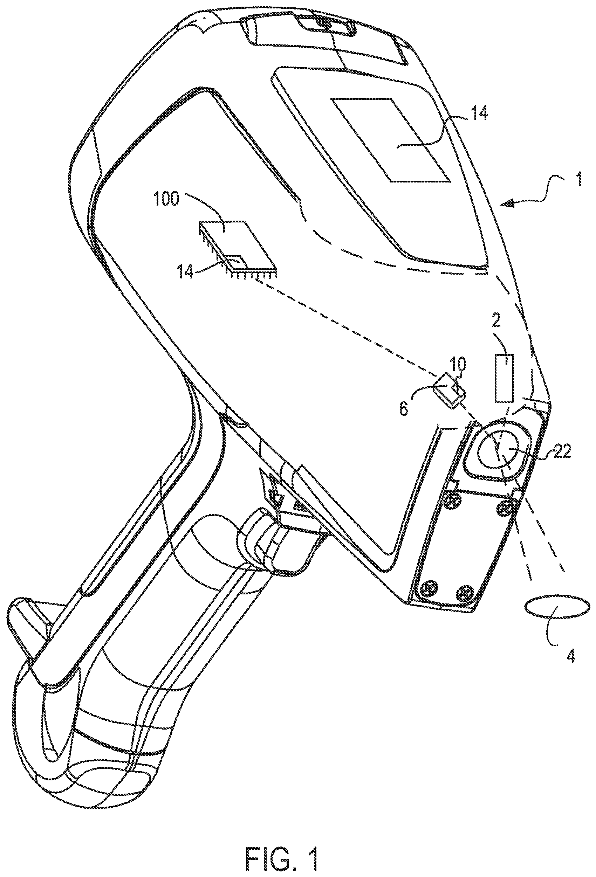

Referring to Fig. 1, in an example implementation of the present disclosure there is provided an X-ray analyzer **1** or detection system having an X-ray source 2, and an X-ray detector **6.** The X-ray detector is a Silicon Drift Detector (SDD) operating at ambient temperature or without axiliary temperature control. The X-ray source is configured to generate primary X-rays to irradiate a test object **4** during an X-ray testing or calibration operation. Detector **6** is configured to detect secondary X-rays emitted from the test object 4 upon being iradiated by the primary X-rays. X-ray analyzer 1 also includes a processor 100. The processor 100 includes hardware, firmware, or software, or any combination of hardware, firmware, and software, collectively for processing energy signals received by detector 6. Processor 100 herein refers to facilities processing all signals and values related to the testing and can comprise discrete or integral electronics or circuitry. X-ray analyzer 1 according to the present disclosure comprises at least one temperature sensor 10. Processor 100 is further configured for correcting the X-ray energy spectrum to account for temperature-induced changes in gain, zero offset and resolution of the electronic pulses produced by the detection system.

In the presently disclosed implementation, temperature sensor 10 is configured to sense a temperature related to detector 6. If detector 6 does not have any cooling or temperature stabilizing facility, the detector's response to secondary X-rays would change and this change would be substantial and dependent on the operating temperature of the detector. For the analyzer 1 to provide an accurate and repeatable reading of spectrum representing of the X-ray response (the secondary X-rays), the changes in detector response due to temperature change are compensated for by processor 100.

Conventional systems do not operate at ambient temperature without a temperature control system and the systems do not compensate for variation of zero offset and resolution.

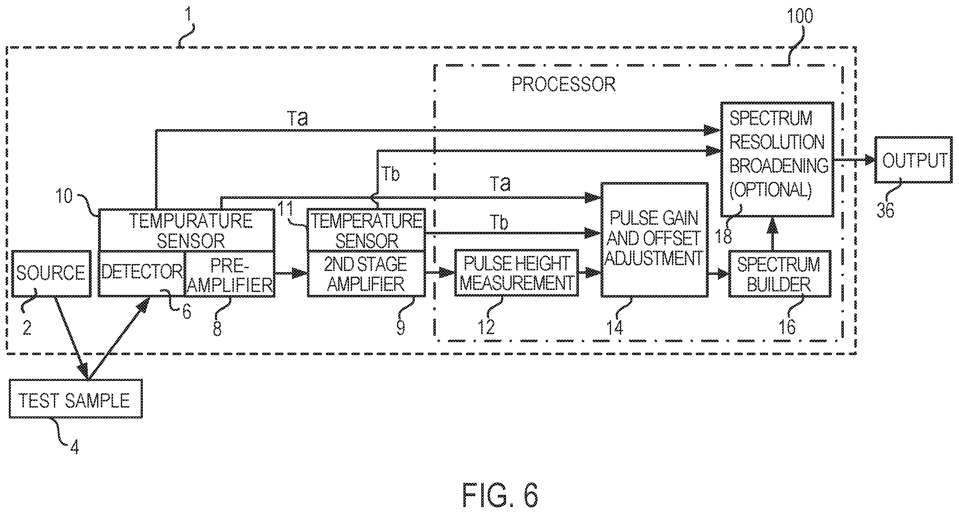

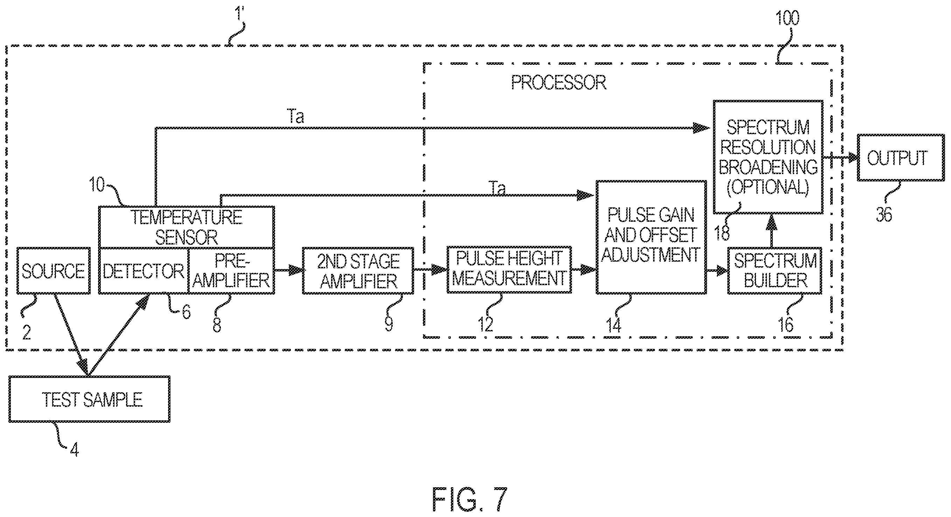

Table 1 shows an example of a gain set for a pre-amplifier as a function of temperature of a detector. (A pre-amplifier may be used in close vicinity of a detector and may share the same thermal environment as the detector. See Figs. 6 and 7 for detailed descriptions of example implementations). Note that at temperatures above about minus 20 degrees Celsius (-20°C) the gain changes quickly, and that between 0°C and -5°C the gain is changing by about 1% per degree C. It can be expected that between 0°C and 20°C (room temperature), the rate of change of the gain will be even faster. Note also that measurements (not shown) of the temperature dependence of the gain of a typical second stage amplifier located on a printed circuit board (PCB) indicate that the dependence is considerably smaller (about 0.01% per degree C).

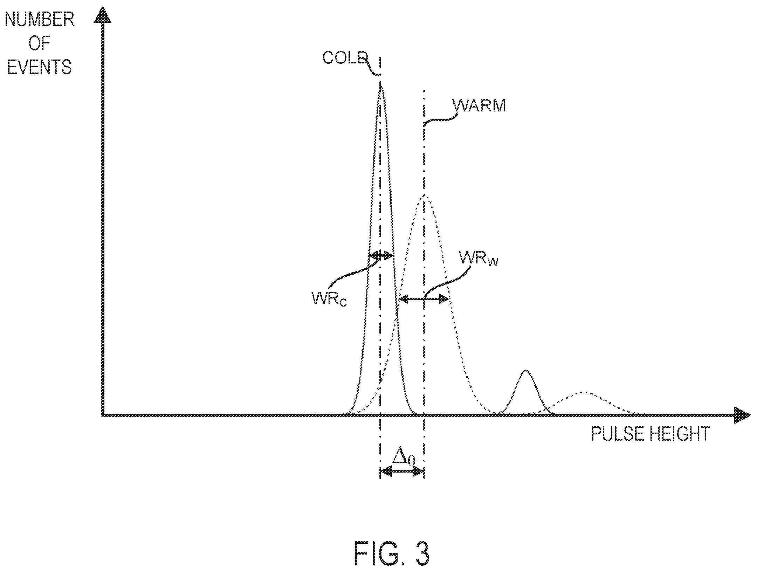

Table 1 shows that there is a general relationship between temperature and gain of a pre-amplifier. The relationship may be an increase or decrease in gain with decreasing temperature. In the implementations disclosed herein, the X-ray analyzer adjusts the gain of pre-amplifier according to change in temperature. The change in resolution is explained later in regard to Fig. 3. The use of preamplifiers and secondary stage amplifiers is later introduced in descriptions related to Figs. 6 and 7.

**TABLE 1**

| **Temperature (°C)** | **Resolution (eV)** | **Gain** |
|---|---|---|
| 0 | 175 | 1621 |
| -5 | 163 | 1700 |
| -10 | 155 | 1748 |
| -15 | 148 | 1781 |
| -20 | 143.5 | 1783 |
| -25 | 141.3 | 1784 |
| -30 | 140.8 | 1786 |
| -35 | 139.9 | 1787 |
| -40 | 139.9 | 1789 |

### Temperature Dependence of Gain and Resolution

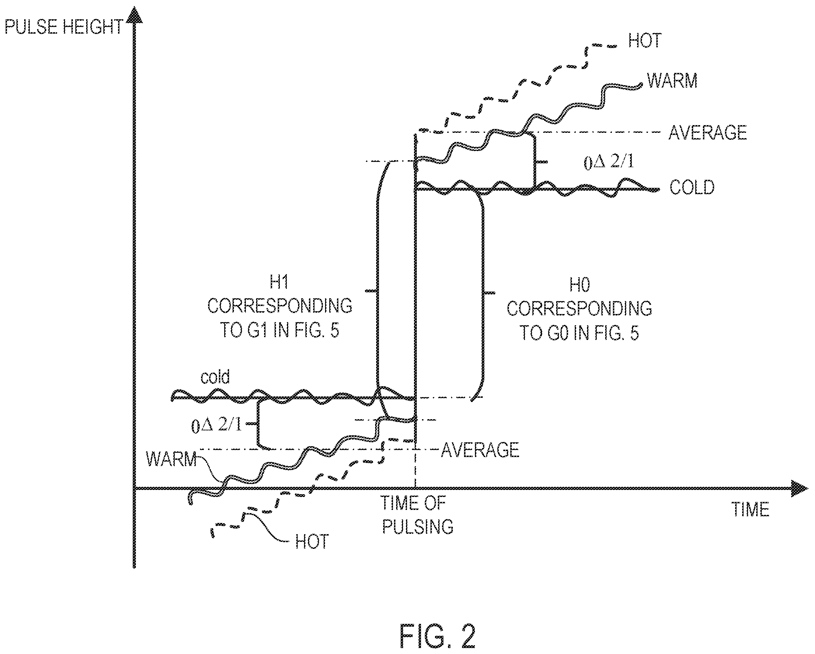

The change in pre-amplifier gain due to temperature may be predicted by empirical measurements such as those shown in Table 1 or Fig. 2, or by theoretical methods. Therefore, if the functional dependence of gain on temperature is observed and if the detector's temperature or pre-amplifier temperature is measured, the gain drift of the system as the temperature changes may be compensated by a dynamic gain correction. The gain is corrected so that the adjusted gain at all temperatures corresponds to the measured or theoretically predicted gain at a selected standard temperature.

Figs. 2 - 5 are presented to explain how a detector's temperature change affects the detector's performance and how compensation for temperature is achieved according to the present disclosure. As can be seen in Fig. 2, the height of the voltage pulse signal generated in a detector by an incident of X-ray is not only proportional to the X-ray energy but is also affected by the detector temperature. The three plots of pulse heights vs. time are conceptually shown for three detector temperatures, one as "cold", one as "Warm" and one as "Hot." As can be seen in Fig. 2, the pulse height is different for all three detector temperatures. For example, H1 and H2 are correspondingly different pulse height for the "cold" detector, and "Warm" detector.

In addition, pulse leakage caused by rising temperature makes the measurement of pulse height "drift" outside the time of pulsing, as seen by the slanted waveforms labeled "Warm" and "Hot." Compensation for the pulse leakage is also preferably considered. A factor related to the pulse leakage is called the "zero offset" which is also temperature dependent. The zero offset in a spectrometer is the signal resulting from a theoretical X-ray of zero energy. Typically, this offset signal is due to the pulse leakage of the detector, which adds a constant contribution to the pulse height. When the detector temperature is allowed to vary, the amount of leakage current, and thus the offset, will also vary. A correction for this effect will improve the accuracy of the spectrum energy scale. For example, if pulse height response for a "cold" detector is used (the temperature of which is used as the calibration temperature), a pulse height adjustment Δ should be applied for plot "Warm" if the average value of the pulse height is used. One skilled in the art should appreciate, upon reading this disclosure, that values other than average values can be used for such compensation. The implementation of such should all be within the scope of the present disclosure.

It should be noted that the temperature compensation can be performed dynamically at different levels. For the gain correction, X-ray pulses are measured at a known detector temperature and the gain may be corrected at the "lowest" necessary level. Levels of the X-ray detector system where gain correction may occur are, listed from lowest to highest level respectively, the hardware level, firmware level, and software level. At the hardware level, a correction to the gain can be applied in real time to each X-ray as it is measured (e.g., at the field programmable gate array (FPGA) level or at the preamplifier level) by adjusting the gain of the system based on the measured temperature output. At the firmware level, programs can be designed so that when they are executed the programs cause correction to the gain at the microsecond timescale. At the software level, programs can be designed to cause a correction to the gain on a millisecond or longer timescale. Dynamic gain correction may be implemented at any of the levels, the chosen level depending on the rate of change of the detector temperature and the length of the desired measurement. For example, if the detector chip temperature is changing slowly over many seconds, it is unnecessary to correct each X-ray pulse if the whole spectrum is collected in less than 1 second, and in this case occasional gain correction at the software level may be appropriate. If the changes in detector temperature have measurable effects over the timescale of milliseconds, then correction at the firmware or hardware level may be appropriate.

For compensation directly made at the hardware level, one implementation of X-ray analyzer 1 may have circuitry that adjusts amplifier gains in a continuous manner, rather than a discrete manner, directly in response to the change in temperature. The gain adjustment can be linear or non-linear depending on the detector's characteristics in responding to temperature. All such alternative implementations are within the scope of the present disclosure.

Fig. 3 is a diagram showing a number of X-ray events vs. pulse height as an aspect of the energy signals received by detector 6. As can be seen in Fig. 3, the effect of pulse leakage is shown to be caused by detector temperature change in two responses when the detector temperature is respectively "Cold" and "Warm". In general, the higher the detector temperature, the wider the pulse height distribution. The total area of each event number-pulse height plot is the same for a specific secondary X-ray response. The implementations according to the present disclosure include providing temperature compensation according to the offset Δ in pulse height change from one temperature to another.

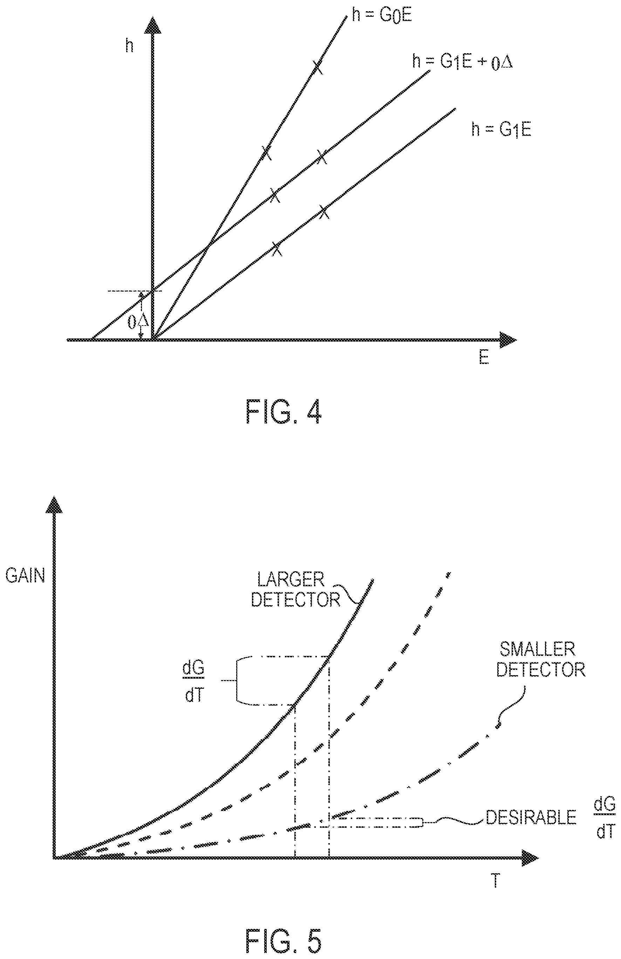

Fig. 4 is a graph showing the detector's response in pulse height versus energy for two detector temperatures, T₀ and T₁. Line H = G₀E represents pulse height vs energy with uncompensated amplifier gain G₀ for a detector temperature T₀ (temperature for the "cold" detector in Fig. 2), without consideration of zero offset. Line H = G₁ E represents pulse height vs energy with compensated amplifier gain G₁ for a detector temperature T₁ (temperature of the "Hot-1" detector in Fig. 2), without consideration of zero offset. Line H = G₁ E + Δ₀ represents pulse height vs energy with compensated gain G₁ for a detector temperature T₁, further adjusted with a zero offset Δ₀ taking into account the pulse leakage caused by temperature change.

The relationship can be summarized as: ${H}_{p} = G \times E + {Δ}_{0}$ (Eq. 1)

Energy resolution in the field of X-ray analyzers is frequently expressed as full width at half maximum (FWHM) and is given in energy units. In the case of X-ray spectrometry, it is usually in electron-volts (eV). Returning to Fig. 3, energy resolution, represented as WR_{C} and WR_{W} for each chart at half height, changes with the change in temperature between a "cold" detector to a "Warm" detector. Change of energy resolution of an instrument is undesirable because energy spectra from the same material may vary depending on the ambient temperature (therefore affecting the detector temperature) at the time of a measurement. Typically, this is because the spectrum is processed using energy ranges to represent X-rays of a particular element. When the resolution worsens, the distribution of measured energies can overlap with other adjacent peaks. This makes it difficult to use data in the overlapping region because it is not possible to determine which peak contributed the signal with a simple region model.

Due to leakage current variations, the energy resolution of the detection system is also temperature dependent. This effect is also shown in Table 1 by measurements of energy resolution of a detector and a pre-amplifier as a function of temperature. The energy resolution increases at a rate of about 1.4% per degree C at temperatures between 0°C and -5°C. The energy resolution change is primarily due to the temperature change of the semiconductor detector.

In order to mitigate the effect of change in energy resolution, the dependence of energy resolution on temperature may be predicted by theoretical and empirical methods, and the change in energy resolution may therefore be compensated for by suitable correction algorithms. In an implementation of such a correction algorithm, the spectrum resolution may optionally be artificially altered (broadened) to provide a lower resolution yet still be consistent with its reaction when the detector is warmer (to make WR_{C} increased to WR_{W}). Preferably, the system is calibrated to the "worst situation" at the highest design temperature. This is because it is easier to broaden the spectrums than to narrow them. In this optional step of calibration, the peaks may be artificially broadened to make the spectrum resolution effectively the same at all temperatures.

Referring to Fig. 5, temperature induced gain drift is exponential to the detector temperature change and is severely detrimental to the function of the X-ray analyzers. This is because X-rays of the same energy may generate different output pulse heights depending on the temperature at the time of acquisition, leading to errors in the X-ray spectrum and incorrect elemental analysis of the sample. It is further observed that the smaller the size of the detectors, the less impact of such gain drift. Therefore, in some implementations of this disclosure, the X-ray analyzer is configured to use multiple smaller detectors rather one larger detector to reduce the dependency on temperature change. This can also contribute to the solution of operating the analyzer without a cooling system. If multiple detectors are required, multiple smaller detectors can be part of the solution to negating the cooling system. Smaller detectors may have the advantage of being less sensitive to temperature variations, but smaller detectors may be less efficient due to their smaller area. To compensate for the lower efficiency, an array of small detectors may be used having a total area that approximates the area of the one larger detector.

To summarize, the methods of providing temperature compensation as explained above can be implemented by providing data in tables according to the equations and/or the methods described previously herein. The data tables can be produced during a gain calibration procedure performed prior to operation with the analyzer 1 for different detector temperatures.

Fig. 6 is a block diagram of an example of an X-ray analyzer 1. In the example implementation, the X-ray analyzer further comprises a pre-amplifier 8 and a second stage amplifier **9,** all operating without temperature control. Detector **6,** pre-amplifier **8,** and the first temperature sensor **10** are configured to be packaged in thermal contact with one another. For illustration purposes, temperature sensor **10** outputs a temperature measurement **Ta.** Second stage amplifier **9** is preferably configured to be on a separate PCB from the pre-amplifier **8** and is in thermal contact with a second temperature sensor **11** outputting a temperature measurement **Tb.** Temperature sensors **10** and **11** may be of any type of temperature sensing device. In a preferred implementation, temperature sensors **10** and **11** are compact, low cost, solid state sensors such as a thermistors, diodes, or pyroelectric sensors. When X-ray analyzer **1** is in operation, temperature sensor **10** continuously produces temperature measurement **Ta** representative of the temperature of detector **6** and pre-amplifier **8,** and temperature sensor 11 continuously produces temperature measurement Tb representative of the temperature of second stage amplifier 9.

It should be noted that the method of removing temperature dependence of gain, zero offset, and energy resolution explained previously herein in regard to Figs. 2 - 4 can be independently applied to gain adjustment for preamplifier 8 and/or secondary stage amplifier 9.

Still referring to Fig. 6, as explained above, the performance of analyzer 1 in terms of measurement accuracy, repeatability and resolution has a significant temperature dependence. This is primarily due to the temperature dependence of the gain of the first stage of amplification because preamplifier or FET 8 is normally temperature sensitive. The temperature dependence of the performance of analyzer 1 is also related to the gain of subsequent amplification stages such as a secondary amplifier 9.

Detector 6 is an SDD because this type of detector has low capacitance so that its energy resolution is fairly good at room temperature.

When the secondary X-rays impinge on detector 6, pre-amplifier 8 produces a step-up in output voltage which is input to second stage amplifier 9, which produces a further amplified pulse signal. The amplified pulse signal is input to a pulse height measurement unit 12 configured to measure the pulse amplitude, which is an uncorrected measurement of the X-ray energy. (See Fig. 2 and associated description for an explanation of pulse height). Note that the pulse height measurement unit 12 may also receive measurements from other electronics providing further amplification and/or shaping of the signal from pre-amplifier 9. A pulse gain and offset adjustment unit 14 according to the present disclosure receives the uncorrected energy measurement from pulse height measurement unit 12, as well as temperature measurements Ta and/or Tb from temperature sensors 10 and 11. Pulse gain and offset adjustment unit 14 incorporates the temperature dependence information about the gain, zero offset based on temperature measurements Ta and Tb. The gain and zero offset dependence are explained in detail in the descriptions associated with Figs. 2 - 5. The gain calibration procedure may include irradiating detector **6** with a standard energy X-ray source, such as 5.9 keV X-rays from a ⁵⁵Fe source, and use the method explained in Figs. 2 - 5. With the method described in the present disclosure, calibration can be performed to compare the known pulse height with measured the output of pulse height by using pulse height measurement unit **12** for known temperatures **Ta** and **Tb.**

The gain and zero offset dependence information enables pulse gain and offset adjustment unit **14** to apply an adjustment to the output of pulse height measurement unit **12** such that the temperature dependence is removed, and a compensated pulse height is obtained. The adjusted pulse height is therefore independent of temperature and represents the pulse height adjusted to a selected standard operating temperature. The processor **100** then feeds the adjusted pulse height as an input to a spectrum builder **16** which accumulates adjusted pulse heights from multiple X-rays to form an adjusted energy spectrum. Note that, if necessary, for each incident X-ray, pulse gain and offset adjustment unit **14** may acquire separate and individual real-time measurements of temperatures **Ta** and **Tb.**

The resolution of the adjusted energy spectrum may still exhibit undesirable temperature dependence. Optionally, a spectrum resolution broadening unit **18** is configured to adjust the energy resolution so that the adjusted energy resolution always corresponds to a known final energy resolution corresponding to a selected fixed temperature. In a preferred implementation, the selected fixed temperature may be the maximum temperature for a measurement or series of measurements. In order to determine the maximum temperature, spectrum resolution broadening unit **18** may optionally receive input of temperature measurements **Ta** and **Tb.** Spectrum resolution broadening unit **18** then artificially broadens the resolution of a spectrum acquired at lower temperature in order to match the known resolution at the maximum temperature. The resolution broadening is generally applied by methods known in the art and applied after acquisition of a complete spectrum.

As noted above, the temperature dependence of the gain of second stage amplifier **9** located on a PCB is considerably smaller than the temperature dependence of the gain of charge-sensitive pre-amplifier **8** located in close proximity to detector **6.** Moreover, the temperature dependences of both the zero offset and the energy resolution are primarily functions of the temperature of the semiconductor material of detector **6.** Therefore, a majority part of the temperature dependence corrections derives from temperature **Ta,** while corrections deriving from temperature **Tb** are of lesser magnitude. Therefore, Fig. 7 illustrates an example of an X-ray instrument **1** in which the second temperature sensor **11** of Fig. 6 is omitted. Omission of the second temperature sensor in X-ray instrument **1** allows simplification of the instrument, including simplification of the correction algorithms and empirical calibrations which relate to only one temperature variable instead of two temperature variables as in X-ray instrument **1.**

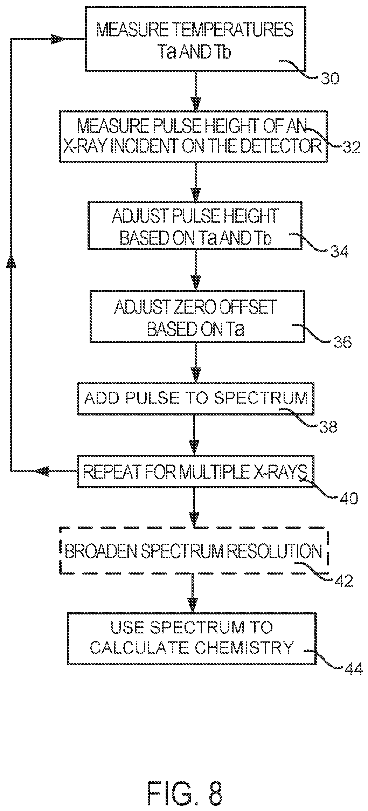

Fig. 8 is a diagram of an example of a method of an X-ray analyzer (e.g., the X-ray analyzer 1 of Fig. 6) conducting a dispersive X-ray analysis without temperature control for its detector. The method of Fig. 8 applies to situations where the measurement is long and/or the ambient temperature is rapidly varying, such that significant temperature change occurs during the course of a single measurement. In step **30,** temperature sensor **10** and optional temperature sensor **11** take temperature measurements **Ta** and optionally **Tb** from the detector and second stage amplifier, respectively. Steps 32 through 42 of Fig. 8 can be performed by processor 100 in Fig. 6 to implement a temperature compensator. In step **32,** pulse height measurement unit **12** measures the pulse height due to an X-ray incident on detector **6.** Based on temperature measurements **Ta** and **Tb,** pulse gain and offset adjustment unit **14** adjusts the pulse height in step **34.** Based on temperature measurement **Ta,** the zero offset, pulse gain and offset adjustment unit **14** adjusts the pulse height in step **36.** In steps **34** and **36,** the pulse height and the zero offset are both adjusted to correspond to their values at the selected standard operating temperature, according to Eq. 1 and the method explained in association with Figs. 2 - 4. In step **38,** spectrum builder **16** adds the adjusted pulse to the spectrum. In step **40,** the method of steps **30** to **38** is repeated for multiple X-rays incident on detector **6.** In step **42,** optionally, after the measurement is ended and a complete spectrum has been acquired, spectrum resolution broadening unit **18** broadens the width of the peaks in the spectrum to correspond to the resolution at the selected fixed temperature. Finally, in step **44** the adjusted spectrum is used to calculate the elemental composition of the test sample.

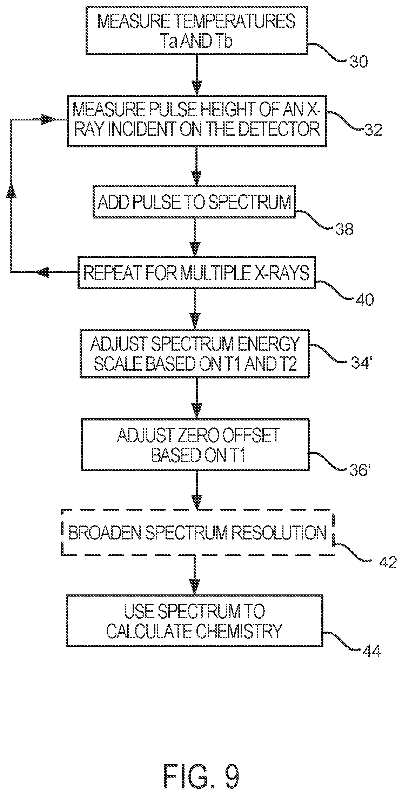

Fig. 9 is a diagram of an alternative method of an X-ray analyzer (e.g., the X-ray analyzer 1 of Fig. 6) conducting a dispersive X-ray analysis without temperature control for its detector. The method of Fig. 9 applies to situations where the measurement is short and/or the ambient temperature is slowly varying, such that no significant temperature change occurs during the course of a single measurement. In step **30,** temperature sensors take temperature measurements of **Ta** and **Tb.** Steps 32 through 42 of Fig. 9 can be performed by processor 100 in Fig. 6 to implement a temperature compensator. In step **32,** the detector **6** receives the X-ray incident and the pulse height measurement unit **12** measures pulse height. Step **32** is followed by step **38** in which spectrum builder **16** adds the pulse with the measure pulse height. In step **40,** the method of steps **32** and **38** is repeated for multiple X-rays incident on detector **6** until the measurement is complete. Thus, a complete spectrum unadjusted for temperature is obtained at completion of step **40.**

In steps **34', 36'** and **42,** the unadjusted spectrum is adjusted to account for temperature variations between different measurements. Based on temperature measurements **Ta** and **Tb,** pulse gain and offset adjustment unit **14** adjusts the spectrum energy scale in step **34'** to correspond to the measured or calculated energy scale at the selected standard operating temperature. Based on temperature measurement **Ta,** the zero offset of the whole spectrum is adjusted in step **36'** to correspond to the measured or calculated zero offset at the selected standard operating temperature. In step **38',** based on temperature measurement **Ta,** spectrum resolution broadening unit **18** broadens the width of the peaks in the spectrum to correspond to the resolution at the selected fixed temperature. It should be noted that processor of the X-ray analyzer executes steps **34', 36'** and **42** according to the method described previously herein in regard to Figs. 2-4. Finally, in step **44** the adjusted spectrum is used to calculate the elemental composition of the test sample.

Note that use of temperature measurement **Tb** in the methods of Fig. 8 and Fig. 9 is optional. Thus steps **30, 34** and **34'** may be modified to omit reference to temperature measurement **T2.**

Note also that combinations and variations of the methods of Fig. 8 and Fig. 9 may be used. For example, the method of Fig. 8 may be used with corrections of steps **34** and **36** being applied, not at every pulse, but only after a selected time or after a selected number of pulses. Alternatively, the method of Fig 9 may be used with the repetition of step **40** occurring, not for the entire measurement, but for a part of the measurement or until a selected measurement time has elapsed.

The flowcharts and block diagrams in the figures may illustrate the apparatus, method, as well as architecture, functions, and operations executable by a computer program product according to various implementations of the present disclosure. Each block in the flowcharts or block diagrams may represent a module, a program segment, a unit or a part of code, which may contain one or more executable instructions for performing specified logic functions. Therefore, the methods described herein are not limited to the specific examples described; rather, any of the method steps may be re-ordered, combined, removed, or performed in parallel or in serial, as necessary, to achieve the results embodying the claims. Further, each block and a combination of blocks in the block diagrams or flowcharts may be implemented by a dedicated, hardware-based system for performing specified functions or operations or by a combination of dedicated hardware and computer instructions.

### ADDITIONAL DESCRIPTION AND EXAMPLES

In example implementations of the present invention, processing may be implemented in hardware, firmware, software, or a combination of any of hardware, firmware, and software. For example, processing may be implemented in computer programs executed on programmable computers/machines that each includes a processor, a storage medium or other article of manufacture that is readable by the processor (including volatile and non-volatile memory and/or storage elements), at least one input device, and one or more output devices. In certain implementations of the present invention, program code may be applied to data entered using an input device to perform processing and to generate output information.

Various exemplary implementations of the present invention have been described with reference to the preceding drawings only as exemplary implementations and the scope of the invention is limited only by the claims. These exemplary implementations are provided only for enabling those skilled in the art to better understand and then further implement the present invention and are not intended to limit the scope of the present invention in any manner.

## Claims

1. An X-ray analyzer (1) comprising:
at least one detector (6) configured to detect a secondary X-ray from a test object (4) irradiated by an X-ray source (2), and provide a corresponding energy signal;
wherein the at least one detector (6) is a silicon drift detector;
a temperature sensor (10) configured to sense a temperature related to the at least one detector (6); and
a signal processor (100) configured to process the energy signal and provide a temperature compensated output for an X-ray event;
wherein the signal processor (100) comprises a temperature compensator (14);
wherein the energy signal includes a pulse having a pulse height;
wherein the pulse height includes an offset caused by temperature-induced pulse-leakage of the at least one detector (6),
**characterized in that**
the temperature compensator (14) is configured to adjust gain of the pulse height according to the temperature; and
the temperature compensator (14) is configured to compensate the pulse height with an offset according to the temperature,
wherein the temperature compensator (14) further comprises calibration tables specifying a temperature dependence of the gain and a temperature dependence of the offset.

2. The X-ray analyzer of claim 1, wherein the temperature compensator (14) is further configured to adjust an energy resolution of the output by compensating the pulse height with a broadened pulse width.

3. The X-ray analyzer of claim 1, wherein the calibration tables are empirically derived in a calibration procedure in which the test object (4) and the pulse height at a calibration temperature are known.

4. The X-ray analyzer of any of claims 1 to 3, wherein the signal processor (100) includes a pre-amplifier which is in thermal contact with the at least one detector (6), and configured to produce the pulse, and wherein the adjusted gain is a pre-amplifier gain.

5. The X-ray analyzer of any of claims 1 to 4, wherein the signal processor (100) includes a secondary stage amplifier configured to contribute to the gain and to producing the pulse, wherein the secondary stage amplifier is in contact with a second temperature sensor measuring a second temperature.

6. The X-ray analyzer of any of claims 1 to 5, wherein the temperature sensor (10) is in physical contact with the at least one detector (6).

7. The X-ray analyzer of any of claims 1 to 6, further comprising an X-ray generator to generate the X-ray source (2).

8. A method of controlling operation of an X-ray testing device, the method comprising the steps of:
detecting a secondary X-ray from a test object irradiated by source X-rays, wherein the step of detecting is provided by a detector, the detector being a silicon drift detector;
providing a corresponding energy signal;
measuring a temperature related to the detector; and
processing the energy signal and providing a temperature compensated output for an X-ray event;
wherein the energy signal includes a pulse having a pulse height, and the step of processing and providing comprises adjusting gain of the pulse height according to the measured temperature;
wherein the pulse includes a zero offset caused by temperature-induced pulse-leakage of the detector, and the step of processing and providing includes compensating the pulse height with the zero offset according to the temperature
**characterized in that**
the temperature compensator further comprises calibration tables specifying a temperature dependence of the gain and a temperature dependence of the offset.

9. The method of claim 8, wherein the step of processing and providing comprises adjusting an energy resolution of the output by compensating the pulse height with a broadened pulse width.

## Patentansprüche

1. Röntgenanalysator (1), umfassend:
mindestens einen Detektor (6), der konfiguriert ist, um eine Sekundärröntgenstrahlung von einem durch eine Röntgenquelle (2) bestrahlten Prüfkörper (4) zu detektieren und ein entsprechendes Energiesignal bereitzustellen;
wobei der mindestens eine Detektor (6) ein Siliziumdriftdetektor ist;
einen Temperatursensor (10), der konfiguriert ist, um eine Temperatur bezogen auf den mindestens einen Detektor (6) zu erfassen; und
ein Signalprozessor (100), der konfiguriert ist, um das Energiesignal zu verarbeiten und eine temperaturkompensierte Ausgabe für ein Röntgenereignis bereitzustellen;
wobei der Signalprozessor (100) einen Temperaturkompensator (14) umfasst;
wobei das Energiesignal einen Impuls mit einer Impulshöhe einschließt;
wobei die Impulshöhe einen Versatz einschließt, der durch temperaturbedingten Impulsverlust des mindestens einen Detektors (6) verursacht wird,
**dadurch gekennzeichnet, dass**
der Temperaturkompensator (14) konfiguriert ist, um die Verstärkung der Impulshöhe entsprechend der Temperatur anzupassen; und
der Temperaturkompensator (14) konfiguriert ist, um die Impulshöhe mit einem Versatz gemäß der Temperatur auszugleichen,
wobei der Temperaturkompensator (14) ferner Kalibriertabellen umfasst, die eine Temperaturabhängigkeit der Verstärkung und eine Temperaturabhängigkeit des Versatzes angeben.

2. Röntgenanalysator nach Anspruch 1, wobei der Temperaturkompensator (14) ferner konfiguriert ist, um eine Energieauflösung der Ausgabe durch Kompensieren der Impulshöhe mit einer verbreiterten Impulsbreite anzupassen.

3. Röntgenanalysator nach Anspruch 1, wobei die Kalibriertabellen in einem Kalibrierverfahren empirisch abgeleitet werden, bei dem der Prüfkörper (4) und die Impulshöhe bei einer Kalibriertemperatur bekannt sind.

4. Röntgenanalysator nach einem der Ansprüche 1 bis 3, wobei der Signalprozessor (100) einen Vorverstärker einschließt, der in thermischem Kontakt mit dem mindestens einen Detektor (6) steht,
und konfiguriert ist, den Impuls zu erzeugen, und wobei die angepasste Verstärkung eine Vorverstärkerverstärkung ist.

5. Röntgenanalysator nach einem der Ansprüche 1 bis 4, wobei der Signalprozessor (100) einen Verstärker der zweiten Stufe einschließt, der konfiguriert ist, um zur Verstärkung beizutragen und den Impuls zu erzeugen, wobei der Verstärker der zweiten Stufe mit einem zweiten Temperatursensor, der eine zweite Temperatur misst, in Kontakt steht.

6. Röntgenanalysator nach einem der Ansprüche 1 bis 5, wobei der Temperatursensor (10) in physischem Kontakt mit dem mindestens einen Detektor (6) steht.

7. Röntgenanalysator nach einem der Ansprüche 1 bis 6, ferner umfassend einen Röntgengenerator zum Erzeugen der Röntgenquelle (2).

8. Verfahren zum Steuern des Betriebs einer Röntgenprüfvorrichtung, das Verfahren umfassend die Schritte:
Detektieren einer sekundären Röntgenstrahlung von einem mit Quellenröntgenstrahlen bestrahlten Prüfkörper, wobei der Schritt des Detektierens durch einen Detektor bereitgestellt wird, wobei der Detektor ein Siliziumdriftdetektor ist;
Bereitstellen eines entsprechenden Energiesignals;
Messen einer Temperatur in Bezug auf den Detektor; und
Verarbeiten des Energiesignals und Bereitstellen einer temperaturkompensierten Ausgabe für ein Röntgenereignis;
wobei das Energiesignal einen Impuls mit einer Impulshöhe einschließt, und der Schritt des Verarbeitens und Bereitstellens das Anpassen der Verstärkung der Impulshöhe gemäß der gemessenen Temperatur umfasst;
wobei der Impuls einen Nullversatz einschließt, der durch eine temperaturinduzierte Impulsleckage des Detektors verursacht wird, und der Schritt des Verarbeitens und Bereitstellens das Kompensieren der Impulshöhe mit dem Nullversatz gemäß der Temperatur einschließt
**dadurch gekennzeichnet, dass**
der Temperaturkompensator ferner Kalibriertabellen umfasst, die eine Temperaturabhängigkeit der Verstärkung und eine Temperaturabhängigkeit des Versatzes angeben.

9. Verfahren nach Anspruch 8, wobei der Schritt des Verarbeitens und Bereitstellens das Anpassen einer Energieauflösung der Ausgabe durch Kompensieren der Impulshöhe mit einer verbreiterten Impulsbreite umfasst.

## Revendications

1. Analyseur de rayons X (1) comprenant :
au moins un détecteur (6) configuré pour détecter un rayon X secondaire provenant d'un objet de test (4) irradié par une source de rayons X (2), et fournir un signal d'énergie correspondant ;
dans lequel l'au moins un détecteur (6) est un détecteur au silicium à diffusion ;
un capteur de température (10) configuré pour détecter une température relative à l'au moins un détecteur (6) ; et
un processeur de signal (100) configuré pour traiter le signal d'énergie et fournir une sortie compensée en température pour un événement de rayons X ;
dans lequel le processeur de signal (100) comprend un compensateur de température (14) ;
dans lequel le signal d'énergie comporte une impulsion ayant une hauteur d'impulsion ;
dans lequel la hauteur d'impulsion comporte un décalage causé par une fuite d'impulsion induite par la température de l'au moins un détecteur (6),
**caractérisé en ce que**
le compensateur de température (14) est configuré pour ajuster le gain de la hauteur d'impulsion selon la température ; et
le compensateur de température (14) est configuré pour compenser la hauteur d'impulsion avec un décalage selon la température,
dans lequel le compensateur de température (14) comprend en outre des tables d'étalonnage spécifiant une dépendance en température du gain et une dépendance en température du décalage.

2. Analyseur de rayons X selon la revendication 1, dans lequel le compensateur de température (14) est en outre conçu pour ajuster une résolution en énergie de la sortie en compensant la hauteur d'impulsion avec une largeur d'impulsion élargie.

3. Analyseur de rayons X selon la revendication 1, dans lequel les tables d'étalonnage sont dérivées empiriquement lors d'une procédure d'étalonnage dans laquelle l'objet de test (4) et la hauteur d'impulsion à une température d'étalonnage sont connus.

4. Analyseur de rayons X selon l'une quelconque des revendications 1 à 3, dans lequel le processeur de signal (100) comporte un préamplificateur qui est en contact thermique avec l'au moins un détecteur (6),
et configuré pour produire l'impulsion, et dans lequel le gain ajusté est un gain de préamplificateur.

5. Analyseur de rayons X selon l'une quelconque des revendications 1 à 4, dans lequel le processeur de signal (100) comporte un amplificateur d'étage secondaire configuré pour contribuer au gain et à la production de l'impulsion, dans lequel l'amplificateur d'étage secondaire est en contact avec un second capteur de température mesurant une seconde température.

6. Analyseur de rayons X selon l'une quelconque des revendications 1 à 5, dans lequel le capteur de température (10) est en contact physique avec l'au moins un détecteur (6).

7. Analyseur de rayons X selon l'une quelconque des revendications 1 à 6, comprenant en outre un générateur de rayons X pour générer la source de rayons X (2).

8. Procédé de commande du fonctionnement d'un dispositif de test à rayons X, le procédé comprenant les étapes consistant à :
détecter un rayon X secondaire provenant d'un objet de test irradié par des rayons X de source, dans lequel l'étape de détection est assurée par un détecteur, le détecteur étant un détecteur au silicium à diffusion ;
fournir un signal d'énergie correspondant ;
mesurer une température liée au détecteur ; et
traiter le signal d'énergie et fournir une sortie compensée en température pour un événement de rayons X ;
dans lequel le signal d'énergie comprend une impulsion ayant une hauteur d'impulsion, et l'étape de traitement et de fourniture comprend l'ajustement du gain de la hauteur d'impulsion selon la température mesurée ;
dans lequel l'impulsion comporte un décalage de zéro causé par une fuite d'impulsion du détecteur induite par la température, et l'étape de traitement et de fourniture comporte la compensation de la hauteur d'impulsion avec le décalage de zéro en fonction de la température
**caractérisé en ce que**
le compensateur de température comprend en outre des tables d'étalonnage spécifiant une dépendance à la température du gain et une dépendance à la température du décalage.

9. Procédé selon la revendication 8, dans lequel l'étape de traitement et de fourniture comprend l'ajustement d'une résolution en énergie de la sortie en compensant la hauteur d'impulsion avec une largeur d'impulsion élargie.
